# EUROPÄISCHE PATENTSCHRIFT

(11) **EP 2 453 269 B1**
(45) Veröffentlichungstag und Bekanntmachung des Hinweises auf die Patenterteilung: **08.01.2020**
(21) Anmeldenummer: 11008891.1
(22) Anmeldetag: 08.11.2011
(51) Int. Cl.: G02B 5/28, B42D 15/00

(54) **Dünnschichtelement mit Mehrschichtstruktur**
Thin film element with multi-layer structure
Elément à couche mince doté d'une structure en plusieurs couches

(30) Priorität: 10.11.2010 DE 102010050895
(43) Veröffentlichungstag der Anmeldung: 16.05.2012
(73) Patentinhaber: Giesecke+Devrient Currency Technology GmbH, 81677 München (DE)
(72) Erfinder: Lochbihler, Hans, 80333 München (DE)

(56) Entgegenhaltungen:
- WO-A1-02/00445
- WO-A1-03/033274
- WO-A1-03/070482
- WO-A1-2009/083151
- DE-A1-102005 021 514
- DE-A1-102008 009 296
- DE-A1-102008 013 167
- US-A1- 2006 001 969
- US-A1- 2008 180 824

## Beschreibung

Die Erfindung betrifft ein Dünnschichtelement mit Mehrschichtstruktur für Sicherheitspapiere, Wertdokumente und dergleichen, umfassend zumindest zwei metallische Schichten und zumindest eine zwischen den zumindest zwei metallischen Schichten angeordnete dielektrische Abstandsschicht, wobei die Mehrschichtstruktur zumindest einen nanostrukturierten Bereich aufweist, in dem die Mehrschichtstruktur zu kegelförmigen oder kegelähnlichen Erhebungen ausgebildet ist. Die Erfindung betrifft ferner ein Durchsichtssicherheitselement und einen Datenträger, die jeweils mit dem vorstehend erwähnten Dünnschichtelement versehen sind.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Seit einigen Jahren haben sich Durchsichtsfenster als attraktive Sicherheitselemente in Polymer- und neuerdings auch in Papier-Banknoten erwiesen, da sie den Einsatz einer Vielzahl von Sicherheitsmerkmalen gestatten.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen.

In diesem Zusammenhang ist bekannt, Sicherheitselemente mit mehrschichtigen Dünnschichtelementen einzusetzen, deren Farbeindruck sich für den Betrachter mit dem Betrachtungswinkel ändert, und beim Kippen des Dünnschichtelements beispielsweise von Grün nach Blau, von Blau nach Magenta oder von Magenta nach Grün wechselt. Das Auftreten derartiger Farbänderungen beim Verkippen eines Dünnschichtelements wird im Folgenden als Farbkippeffekt bezeichnet.

Eine weitere besondere Rolle bei der Echtheitsabsicherung spielen Durchsichtssicherheitselemente, die einen Kontrast zwischen ihrem Erscheinungsbild in Aufsicht und in Durchlicht zeigen.

In der Schrift EP-1434695-B1 wird ein Sicherheitselement beschrieben, welches eine schwarz erscheinende Oberfläche aufweist. Diese schwarze Oberfläche wird durch ein metallisiertes Kreuzgitter mit einer Subwellenlängenperiode gebildet, welches das einfallende Licht absorbiert. Weiterhin wird dargelegt, dass die Absorptionseigenschaften des Kreuzgitters durch das Aufbringen einer dünnen dielektrischen Schicht verbessert werden können.

Kontrastreiche Motive, welche z.B. als Sicherheitselemente auf Banknoten dienen, erfordern häufig einen matten schwarzen Hintergrund, vor dem sich das Muster deutlich abhebt. Eine weitere Anforderung ist, dass die Motivausprägung bei Mikrobildern von Moire-Magnifiern im Mikrometerbereich erfolgen muss. Darüber hinaus ist es wünschenswert, dass das Motiv eine vorbestimmte Farbe mit hoher Farbsättigung aufweist und der Hintergrund möglichst dunkel erscheint. Diese Motive sollen schließlich durch ein Prägewerkzeug auf Folie replizierbar sein.

Ausgehend davon liegt der Erfindung die Aufgabe zugrunde, ein Dünnschichtelement bereitzustellen, das die vorstehend genannten Eigenschaften aufweist.

Diese Aufgabe wird durch das Dünnschichtelement, das Durchsichtssicherheitselement, den Datenträger und das Herstellungsverfahren gemäß den unabhängigen Ansprüchen gelöst. Weiterbildungen der Erfindung sind Gegenstand der Unteransprüche.

Ein erster Aspekt der Erfindung betrifft ein Dünnschichtelement mit Mehrschichtstruktur für Sicherheitspapiere, Wertdokumente und dergleichen, umfassend zumindest zwei metallische Schichten und zumindest eine zwischen den zumindest zwei metallischen Schichten angeordnete dielektrische Abstandsschicht, wobei die Mehrschichtstruktur zumindest einen nanostrukturierten Bereich aufweist, in dem die Mehrschichtstruktur zu kegelförmigen oder kegelähnlichen Erhebungen ausgebildet ist (ein solcher nanostrukturierter Bereich wird nachfolgend als Bereich mit Mottenaugenstruktur bezeichnet).

Die kegelförmigen oder kegelähnlichen Erhebungen sind aperiodisch (d.h. nicht gleichmäßig beabstandet) angeordnet. Aus Gründen der Herstellung wird eine aperiodische Anordnung bevorzugt. Die Oberfläche eines Substrats, insbesondere die eines Kunststoffsubstrats, lässt sich auf einfache Weise durch Plasmabestrahlung entsprechend ausbilden.

Ein zweiter Aspekt der Erfindung betrifft ein Durchsichtssicherheitselement für Sicherheitspapiere, Wertdokumente und dergleichen, mit einem Träger und einem auf dem Träger aufgebrachten Dünnschichtelement gemäß dem ersten Aspekt der Erfindung.

Ein dritter Aspekt der Erfindung betrifft einen Datenträger mit einem Dünnschichtelement gemäß dem ersten Aspekt der Erfindung, bei dem das Dünnschichtelement in oder über einem transparenten Fensterbereich oder einer durchgehenden Öffnung des Datenträgers angeordnet ist. Der Datenträger kann vorzugsweise ein Wertdokument, wie eine Banknote, insbesondere eine Papierbanknote, eine Polymerbanknote, eine Folienverbundbanknote oder Ausweiskarte sein.

Ein vierter Aspekt der Erfindung betrifft ein Verfahren zum Herstellen eines Dünnschichtelements nach Anspruch 11.

Eine Substratoberfläche, die zumindest einen nanostrukturierten Bereich mit kegelförmigen oder kegelähnlichen Erhebungen, die aperiodisch angeordnet sind (dieser Bereich wird nachfolgend auch als Randomstruktur bezeichnet), und zumindest einen ebenen Bereich aufweist, kann durch Plasmastrahlung erzeugt werden. Die einer Plasmastrahlung ausgesetzte Substratoberfläche durchläuft dabei strukturell einen Reorganisationsprozess, der zur Ausbildung einer Randomstruktur führt.

Insbesondere kann ein Substrat, dessen gesamte Oberfläche mittels Plasmastrahlung behandelt worden ist, als Ausgangsmaterial für einen photolithographischen Prozess zur Erhaltung einer lateral fein strukturierten Oberfläche mit ebenen Bereichen und randomstrukturierten Bereichen dienen. Dabei wird in einem ersten Schritt auf die gesamte, mittels Plasmastrahlung behandelte Substratoberfläche z.B. durch Spin-Coating ein Photolack aufgebracht. Die Bereiche, die für den Betrachter später dunkel erscheinen sollen, werden danach z.B. in einem Direkt Laserbelichtungsverfahren mittels eines Laser-Writers belichtet. Nach dem Entwickeln des Photolacks sind diese Bereiche von Photolack befreit, so dass die Oberfläche allein durch eine Mottenaugenstruktur gebildet ist. Dagegen haben die unbelichteten Bereiche eine glatte Oberfläche. Von diesem auf diese Weise modifizierten Substrat wird nun eine Kopie aus einem robusten, beständigen Material bereitgestellt. Hierfür eignet sich ein galvanischer Abformprozess. Es kann jedoch auch eine Kopie aus einem UV-härtenden Polymer (z.B. ein Polymer mit dem Handelsnamen "ORMOCER") bereitgestellt werden. Eine solche Kopie kann als Prägestempel verwendet werden, um die Struktur durch Heißprägen auf eine Folie oder bevorzugt durch Prägen in UV-Lack (Nano-Casting) zu kopieren. Nach metallischem Bedampfen sind die gewünschten optischen Effekte schließlich auf der Folie bzw. dem UV-Lack erkennbar.

Der Erfindung liegt die Erkenntnis zugrunde, dass sich nanostrukturierte Oberflächen, z.B. nanostrukturierte Randomoberflächen (Randomoberfläche = Oberfläche mit aperiodischer Strukturierung), infolge ihres dunklen Erscheinungsbildes in äußerst vorteilhafter Weise zur kontrastreichen Darstellung von Motiven eignen. Durch Ausbilden von z.B. einem Trilayer aus zwei metallischen Schichten und einer dazwischen angeordneten dielektrischen Schicht durch Bedampfung kann eine deutliche Kontrastverbesserung zwischen den nanostrukturierten Bereichen und den ebenen bzw. glatten Bereichen erzielt werden. Das Motiv kann dadurch in einer gewünschten Farbe mit hoher Farbsättigung vor einem schwarzen Hintergrund dargestellt werden.

Die Tatsache, dass eine fein strukturierte metallische Oberfläche gegenüber einer glatten metallischen Oberfläche eine erhöhte Lichtabsorption zeigt, kann man sich folgendermaßen erklären: das einfallende Licht wird in den Kavitäten der Oberfläche mehrfach reflektiert und erleidet dadurch eine höhere Absorption. Eine exaktere Erklärung für das verringerte Reflexionsverhalten eines Übergangs von zwei Medien mit einer mikroskopischen Sägezahnstruktur als Grenzfläche liefert die so genannte Effektiv-Medium-Theorie. Diese ergibt einen Bereich, in dem der mittlere Brechungsindex kontinuierlich vom Index des ersten Mediums zu dem Index des zweiten Mediums übergeht. Somit wird das Licht an der Metalloberfläche konzentriert und als Folge der endlichen Leitfähigkeit des Metalls absorbiert. Ferner können bei Subwellenstrukturen Oberflächenresonanzen angeregt werden, welche ebenfalls eine erhöhte Lichtabsorption zur Folge haben.

Die Erfindung wird nachstehend anhand von bevorzugten Ausführungsformen beschrieben.

Das erfindungsgemäße Dünnschichtelement mit Mehrschichtstruktur umfasst zumindest zwei metallische Schichten und zumindest eine zwischen den zumindest zwei metallischen Schichten angeordnete dielektrische Abstandsschicht, wobei die Mehrschichtstruktur zumindest einen nanostrukturierten Bereich aufweist, in dem die Mehrschichtstruktur zu kegelförmigen oder kegelähnlichen Erhebungen ausgebildet ist. Die kegelförmigen oder kegelähnlichen Erhebungen können periodisch (d.h. gleichmäßig beabstandet) oder aperiodisch (d.h. nicht gleichmäßig beabstandet) angeordnet sein. Die metallischen Schichten sind bevorzugt semitransparent. Weiter wird bevorzugt, dass bei Betrachtung in Aufsicht die obere metallische Schicht semitransparent ist und die untere metallische Schicht eine reflektierende Schicht ist. Im Falle, dass das Dünnschichtelement eine Mehrschichtstruktur mit z.B. drei (bzw. fünf, sieben, u.s.w.) metallischen Schichten und zwei (bzw. vier, sechs, u.s.w.) zwischen den metallischen Schichten angeordneten dielektrischen Abstandsschichten aufweist, wird bevorzugt, dass bei Betrachtung in Aufsicht die oberste metallische Schicht semitransparent ist und die unterste metallische Schicht eine reflektierende Schicht ist.

Die Mehrschichtstruktur des Dünnschichtelements weist vorzugsweise zumindest einen ebenen Bereich auf. In dem ebenen Bereich sind die zumindest zwei metallischen Schichten und die zumindest eine zwischen den zumindest zwei metallischen Schichten angeordnete dielektrische Abstandsschicht flach ausgebildet.

Der durchschnittliche Abstand zwischen den kegelförmigen oder kegelähn-lichen Erhebungen ist vorzugsweise in einem Bereich von 50 nm bis 400 nm, weiter bevorzugt in einem Bereich von 100 nm bis 300 nm. Die durchschnittliche Höhe der Erhebungen ist vorzugsweise in einem Bereich von 30 nm bis 500 nm, weiter bevorzugt in einem Bereich von 80 nm bis 500 nm.

Die metallischen Schichten des erfindungsgemäßen Dünnschichtelements sind z.B. unabhängig voneinander aus Al, Ag, Cr, Ni, Cu, Pd, Au oder einer Legierung zweier oder mehrerer dieser Elemente gebildet.

Die dielektrische Abstandsschicht des erfindungsgemäßen Dünnschichtelements ist z.B. aus SiO₂, ZnS, MgF_{2,} TiO₂ oder Ta₂O₅ gebildet.

Das erfindungsgemäße Dünnschichtelement kann vorzugsweise in Form von Mustern, Zeichen oder einer Codierung vorliegen. Dabei kann z.B. der nanostrukturierte Bereich der Mehrschichtstruktur in Form eines Zeichens, eines Musters oder einer Codierung vorliegen, während der ebene Bereich der Mehrschichtstruktur einen Hintergrund bildet, oder umgekehrt. Denkbar ist aber auch, dass ein Muster, ein Zeichen oder eine Codierung sowohl aus nanostrukturierten Bereichen der Mehrschichtstruktur, als auch aus ebenen Bereichen der Mehrschichtstruktur gebildet wird, die abwechselnd angeordnet sind. Weiterhin kann ein vollflächiges Dünnschichtelement gemäß der vorliegenden Erfindung mit Aussparungen in Form von Mustern, Zeichen oder einer Codierung versehen sein.

Weiter wird bevorzugt, dass das erfindungsgemäße Dünnschichtelement mit einer Mikrolinsenanordnung kombiniert wird. Auf diese Weise lassen sich z.B. Moire-Magnifier-Anordnungen erzeugen.

Die Erfindung betrifft auch ein Durchsichtssicherheitselement für Sicherheitspapiere, Wertdokumente und dergleichen, mit einem Träger und einem auf dem Träger aufgebrachten Dünnschichtelement der beschriebenen Art. Der Träger kann z.B. in Form einer transparenten Trägerfolie (beispielsweise einer PET-Folie) vorliegen. Der Träger kann ferner einen strahlungshärtenden Lack (beispielsweise einen UV-Lack) aufweisen. Insbesondere kann der Träger ein UV-härtendes anorganisch-organisches Hybridpolymer umfassen, das beispielsweise unter dem Markennamen "ORMOCER" vertrieben wird.

Die Erfindung betrifft auch einen Datenträger mit einem Dünnschichtelement der beschriebenen Art, wobei das Dünnschichtelement insbesondere in oder über einem transparenten Fensterbereich oder einer durchgehenden Öffnung des Datenträgers angeordnet ist. Bei dem Datenträger kann es sich insbesondere um ein Wertdokument, wie eine Banknote, insbesondere eine Papierbanknote, eine Polymerbanknote oder eine Folienverbundbanknote handeln, oder um eine Ausweiskarte, wie etwa eine Kreditkarte, Bankkarte, Barzahlungskarte, Berechtigungskarte, einen Personalausweis oder eine Passpersonalisierungsseite handeln.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

Es zeigen:
- Fig. 1: ein Dünnschichtelement, umfassend eine metallisch bedampfte Deckschicht, wobei das Dünnschichtelement eine Mottenaugenstruktur und einen ebenen Abschnitt aufweist;
- Fig. 2a: eine mikroskopische Untersuchung (REM-Aufnahme) einer Mottenaugenstruktur, welche nach dem Plasmaätzverfahren hergestellt wurde;
- Fig. 2b: eine mikroskopische Untersuchung (AFM-Aufnahme) einer Mottenaugenstruktur, welche nach dem Plasmaätzverfahren hergestellt wurde;
- Fig. 3a: eine REM-Aufnahme von einer in Nickel abgeformten Mottenaugenstruktur in Aufsicht;
- Fig. 3b: eine REM-Aufnahme von einer in Nickel abgeformten Mottenaugenstruktur unter dem Betrachtungswinkel von 45°;
- Fig. 4: die gemessene Reflexion (Einfallswinkel 8°) einer mit 100 nm Aluminium bedampften Folie mit Mottenaugenstruktur (durchzogene Linie 1) einerseits, und einer ebenen Oberfläche (gestrichelte Linie 2) andererseits;
- Fig. 5: ein erfindungsgemäßes Dünnschichtelement, das eine durch Bedampfung erzeugte Trilayer-Struktur aufweist, mit einer Mottenaugenstruktur und einem ebenen Abschnitt;
- Fig. 6a: die gemessene Reflexion (Einfallswinkel 8°) der Trilayer 20 nm Ag / SiO₂ / 20 nm Ag bzw. 10 nm Al / SiO₂ / 10 nm Al, jeweils eingebettet in eine 23 µm PET-Folie, mit einer Mottenaugenstruktur;
- Fig. 6b: die gemessene Reflexion (Einfallswinkel 8°) der Trilayer 20 nm Ag / SiO₂ / 20 nm Ag bzw. 10 nm Al / SiO₂ / 10 nm Al, jeweils eingebettet in eine 23 µm PET-Folie, mit einer ebenen Oberfläche;
- Fig. 7: ein erfindungsgemäßes Dünnschichtelement mit einer Mottenaugenstruktur und einem ebenen Abschnitt, das eine halbtransparente Metallschicht, eine dielektrische Abstandsschicht und eine metallischen Reflektorschicht aufweist;
- Fig. 8a: die gemessene Reflexion (Einfallswinkel 8°) der Schichtfolge 8 nm Cr, 150-380 nm SiO₂, 60 nm Al, eingebettet in eine 23 µm PET-Folie, mit einer Mottenaugenstruktur;
- Fig. 8b: die gemessene Reflexion (Einfallswinkel 8°) der Schichtfolge 8 nm Cr, 150-380 nm SiO₂, 60 nm Al, eingebettet in eine 23 µm PET-Folie, mit einer ebenen Oberfläche;
- Fig. 9: die gemessene Reflexion (Einfallswinkel 8°) der Schichtfolge 10nm Cr, 150 nm ZnS, 60 nm Al, eingebettet in eine 23 µm PET-Folie, mit einer Mottenaugenstruktur (Linie 1) und einer ebenen Oberfläche (Linie 2);
- Fig. 10: die gemessene Reflexion (Einfallswinkel 8°) bei Mottenaugenstrukturen, die durch zwei jeweils in eine 23 µm PET-Folie eingebettete unterschiedliche Schichtsysteme gebildet werden (zur Verdeutlichung der unterschiedlichen Farbkippeigenschaften);
- Fig. 11a: ein Durchsichtssicherheitselement mit einer Moire-Magnifier-Anordnung mit Mikrobildern, wobei als zentraler Bestandteil ein Trilayer mit halbtransparenten Metallschichten enthalten ist;
- Fig. 11b: ein Sicherheitselement mit einer Moire-Magnifier-Anordnung mit Mikrobildern, wobei als zentraler Bestandteil ein sog. Standard-Colour-Shift Aufbau, d.h. ein Trilayer mit einer halbtransparenten Metallschicht und einer reflektierenden Metallschicht (Spiegelschicht) enthalten ist;
- Fig. 12: ein Verfahren zum Herstellen eines Prägestempels zum Erzeugen des erfindungsgemäßen Dünnschichtelements; und
- Fig. 13: ein weiteres Verfahren zum Herstellen eines Prägestempels zum Erzeugen des erfindungsgemäßen Dünnschichtelements.

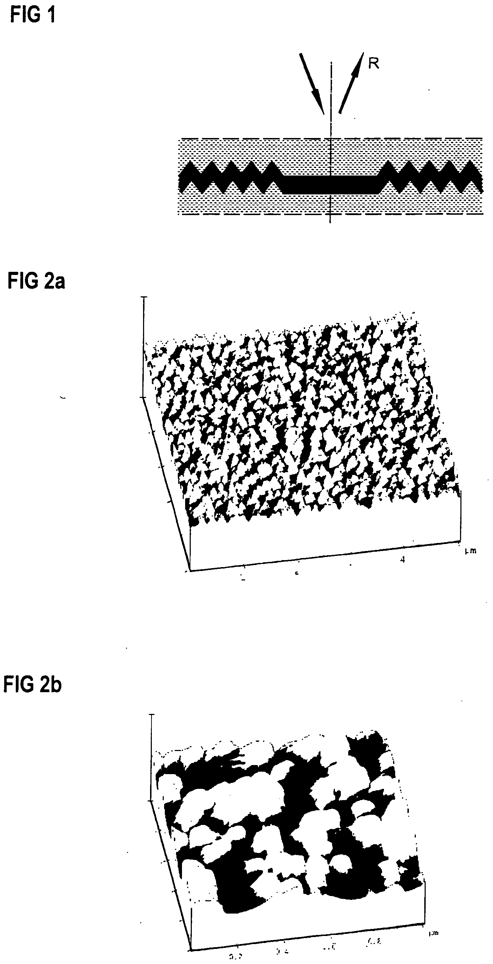

Die laterale Strukturierung des erfindungsgemäßen Dünnschichtelements kann folgendermaßen erfolgen:
Die Oberfläche eines Substrats (z.B. eine Folie) wird mittels Plasmastrahlung in bestimmten Bereichen nanostrukturiert und dabei mit aperiodisch angeordneten kegelförmigen bzw. kegelähnlichen Erhebungen versehen. Wenn nun die Oberfläche metallisch bedampft wird, erscheinen die nanostrukturierten Bereiche dunkel, während die verbleibenden, jeweils eine ebene Fläche darstellenden Bereiche metallisch glänzend erscheinen. Die metallische Schicht kann gegebenenfalls mit einer Schutzschicht, z.B. einem UV-Lack, versehen werden. Der Querschnitt einer solchen Struktur ist in Fig. 1 skizziert.

Die Nanostrukturierung des Substrats mit periodisch oder aperiodisch angeordneten kegelförmigen bzw. kegelähnlichen Erhebungen kann darüber hinaus durch Abformen eines metallischen Prägestempels in eine Folie oder in einen UV-Lack erfolgen. Der Prägestempel kann durch einen photolithographischen Prozess, z.B. Interferenzlithographie (hierbei werden ultraviolette Laserstrahlen geteilt, aufgeweitet und überlagert; im Überlagerungsbereich entsteht ein Hell-Dunkel-Muster, das sogenannte Interferogramm; damit wird ein Photoresist belichtet und bei der nachfolgenden Entwicklung in Abhängigkeit von der Belichtungsdosis abgetragen, so dass eine Oberflächenstruktur entsteht), oder durch Elektronenstrahlung (e-beam) erhalten werden. Bei der lithographischen Herstellung des Prägestempels wird eine nanostrukturierte ORMOCER-Oberfläche mit einem Photolack überzogen. Anschließend wird bereichsweise belichtet. Eine mikrometergenaue Belichtung kann z.B. durch Direct-Laserwriting erfolgen. Die nanostrukturierte Oberfläche des belichteten Bereichs wird schließlich durch das Auflösen des belichteten Photolacks mittels eines geeigneten Lösungsmittels freigelegt. Durch Nano-Casting oder Electro-Forming kann dann der Prägestempel erhalten werden.

Fig. 2 zeigt einen mikroskopischen Ausschnitt der Oberfläche einer Mottenaugenstruktur. Die Struktur besteht aus aperiodisch (d.h. nicht gleichmäßig beabstandet) angeordneten kegelförmigen oder kegelähnlichen Erhebungen (die nachfolgend der Einfachheit halber als "Kegel" bezeichnet werden). Der durchschnittliche Abstand der einzelnen Kegel beträgt etwa 100 nm. Die durchschnittliche Höhe der Erhebungen liegt ebenfalls bei etwa 100 nm. Für eine optimale Absorptionseigenschaft im sichtbaren Bereich ist eine durchschnittliche Höhe der Erhebungen von mehr als 80 nm bevorzugt.

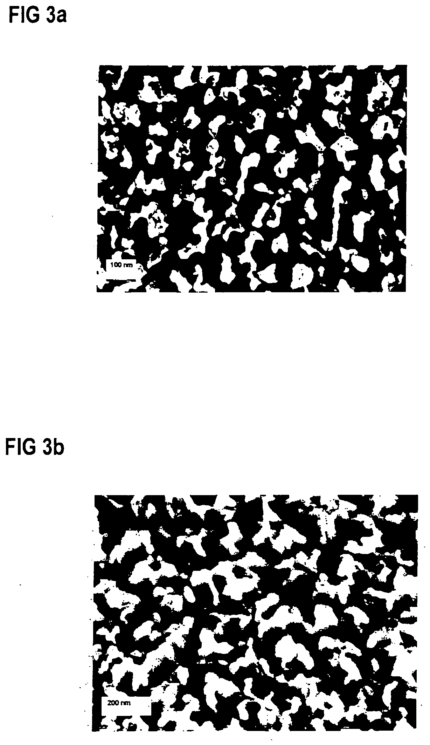

Jedoch kann die Topographie solcher Mottenaugenstrukturen auch eher wie eine Krater- oder Gebirgslandschaft ausgeprägt sein. Figuren 3a und 3b zeigen REM-Aufnahmen von einer in Nickel galvanisch abgeformten Kunststoffstruktur in Aufsicht bzw. bei Betrachtung in einem Winkel von 45°. Der optische Effekt der verringerten Reflexion ist dabei unabhängig von der genauen Beschaffenheit der Oberfläche. Die wesentlichen Parameter sind dabei nur der mittlere Strukturabstand und die mittlere Strukturtiefe.

Fig. 3a zeigt eine REM-Aufnahme von einer in Nickel abgeformten Mottenaugenstruktur in Aufsicht. Fig. 3b zeigt eine REM-Aufnahme von einer in Nickel abgeformten Mottenaugenstruktur unter dem Betrachtungswinkel von 45°.

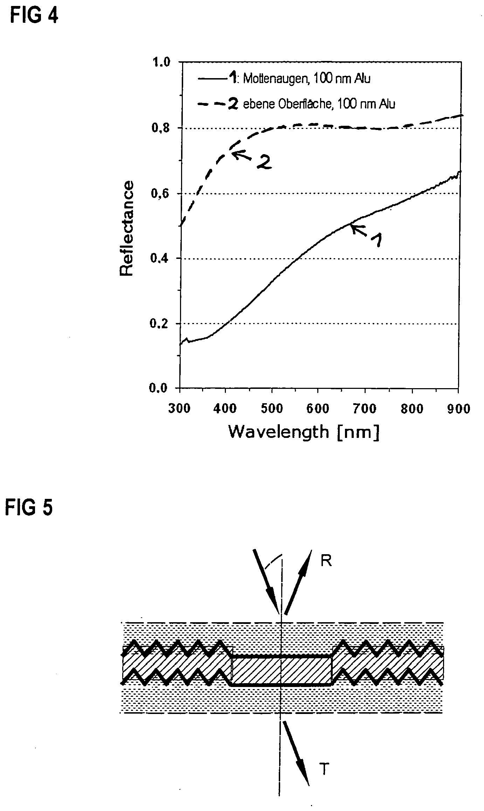

Fig. 4 zeigt die gemessene Reflexion unter dem Einfallswinkel von 8° bei einer mit 100 nm Aluminium bedampften Mottenaugenstruktur, welche in eine 23 µm PET-Folie eingebettet ist (durchzogene Linie 1). Im Vergleich ist auch die Reflexion einer Probe mit ebener Oberfläche dargestellt (gestrichelte Linie 2). Die mittlere Reflexion liegt für die Probe mit Mottenaugenstruktur im sichtbaren Bereich bei etwa 40% (diese Struktur erscheint bei visueller Betrachtung nicht mehr schwarz, sondern leicht bräunlich), während die Reflexion für die Probe mit ebener Oberfläche hingegen bei etwa 80% liegt. Die Herstellung eines Prägewerkzeugs erfordert ein mehrfaches Umkopieren der Originalstruktur. Aufgrund der physikalisch limitierten Abformgenauigkeit verringert sich dadurch das Absorptionsvermögen der Proben auf Folie.

Erfindungsgemäß kann der Kontrast mittels eines z.B. durch Bedampfung erzeugten Trilayers anstelle einer einfachen Metallschicht deutlich erhöht werden. Solche Schichten bestehen z.B. aus zwei halbtransparenten Metallschichten und einer dazwischenliegenden dielektrischen Abstandsschicht. Dieser Schichtaufbau wirkt wie ein Fabry-Perot Resonator, der für resonante Wellenlängen eine erhöhte Transmission aufweist. Trilayer-Systeme können Farben mit hoher Sättigung sowohl in Transmission, als auch in Reflexion hervorrufen. Eine Mottenaugenstruktur, die durch ein mittels Bedampfung erzeugten Trilayer-System gebildet wird, ist schematisch in Fig. 5 dargestellt. Im Vergleich zu der Ausgestaltung in Fig. 1 tritt hierbei auch Lichttransmission auf. Ferner ist bemerkenswert, dass bei einem symmetrischen Schichtaufbau die visuelle Erscheinung, die jeweils von der Vorderseite und von der Rückseite her betrachtet wird, identisch ist. In Fig. 5 bezeichnet "R" die Reflexion, d.h. den reflektierten Teil des einfallenden Lichtes, und "T" die Transmission, d.h. den durchgelassenen Teil des einfallenden Lichtes.

Nachfolgend wird die Reflexion von Mottenaugenstrukturen mit unterschiedlichen Trilayer-Systemen erläutert. Die Metalle Al, Ag, Cr, Ni, Cu, Pd, Au bzw. Legierungen von zwei oder mehreren dieser Elemente eignen sich insbesondere zur Bildung der metallischen Schichten. Die Dicke der Metallschicht wird vorzugsweise so gewählt, dass das Licht die Metallschicht durchdringen kann. Für Aluminium beträgt dieser Wert beispielsweise etwa 10 nm, für Silber etwa 20 nm.

Die dielektrische Abstandsschicht kann z.B. aus den Materialien SiO₂, ZnS, MgF_{2,} TiO₂ oder Ta₂O₅ gebildet sein.

Die einzelnen Schichten können durch Elektronenstrahlbedampfen, Sputtern oder thermisches Verdampfen erzeugt werden.

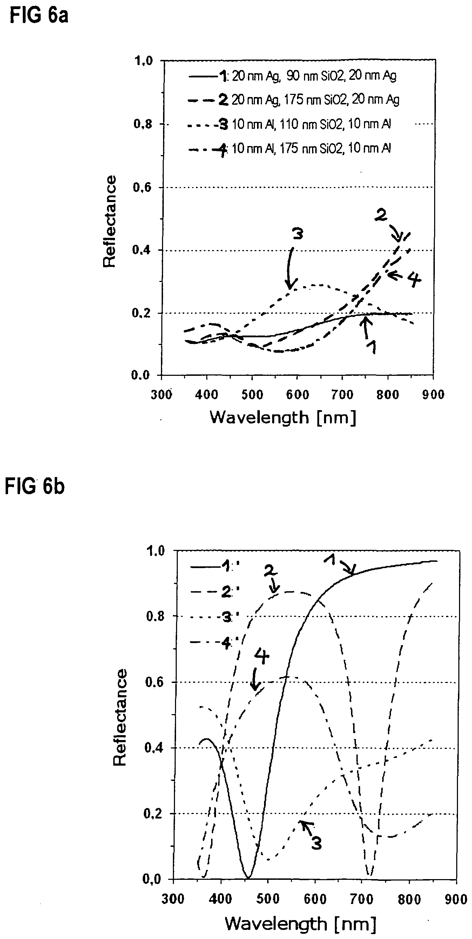

Fig. 6a zeigt die gemessene Reflexion unter einem Einfallswinkel von 8° für vier verschiedene Trilayer, die auf Mottenaugenstrukturen aufgebracht sind:
Probe 1: 20 nm Ag, 90 nm SiO2, 20 nm Ag;
Probe 2: 20 nm Ag, 175 nm SiO2, 20 nm Ag;
Probe 3: 10 nm Al, 110 nm SiO2, 10 nm Al;
Probe 4: 10 nm Al; 175 nm SiO2; 10 nm Al.

Zum Vergleich ist in Fig. 6b auch die Reflexion von ebenen Proben dargestellt. Alle Proben sind in eine 23 µm dicke PET-Folie eingebettet. Die Mottenaugenstruktur wird durch UV-Lack gebildet. Die Mottenaugenstrukturen haben eine matte dunkle Erscheinung, die Reflexion zeigt nur eine schwache Dispersion. Eine dickere dielektrische Abstandsschicht bewirkt eine größere Absorption. Die Verwendung von Aluminium liefert gegenüber Silber ein etwas besseres Ergebnis. Dieselben Schichtfolgen zeigen bei ebenen Oberflächen hingegen Farben mit hoher Sättigung:
Probe 1: goldfarben; Probe 2: hellgrün; Probe 3: violett; Probe 4: hellgrün. Die mittlere visuelle Reflexion ist für die Probe 4 am niedrigsten und liegt bei ca. 8%.

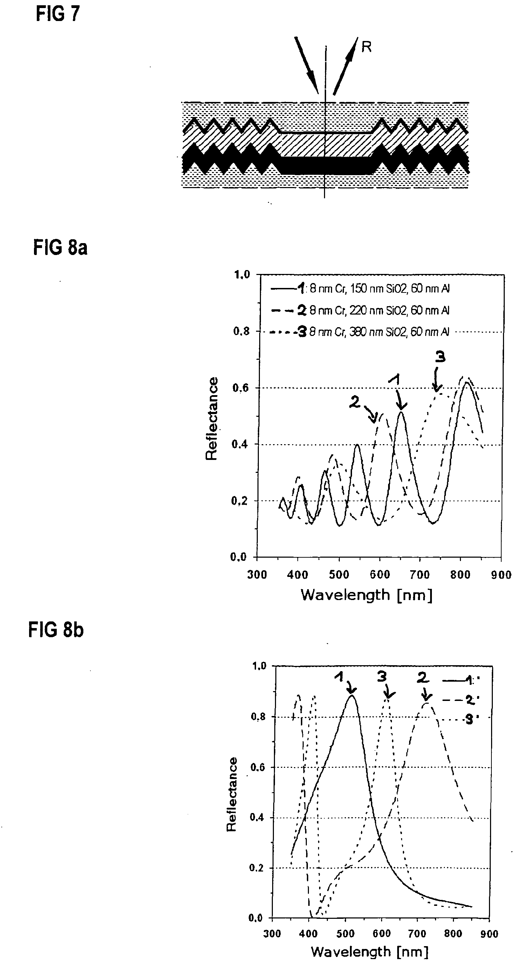

Die Schichtfolge einer Mottenaugenstruktur kann auch folgendermaßen ausgebildet sein:
Zunächst wird eine halbtransparente Metallschicht aufgebracht, anschließend eine dielektrische Abstandsschicht und zuletzt eine opake metallische Spiegelschicht (d.h. reflektierende Schicht). Der Querschnitt dieses Schichtaufbaus ist für eine Mottenaugenstruktur, welche in der Mitte einen ebenen Bereich aufweist, in Fig. 7 dargestellt. Im Gegensatz zu dem oben diskutierten Design kann hier keine Transmission beobachtet werden.

Figuren 8a und 8b zeigen die gemessene Reflexion an drei Proben mit verschiedenen Schichtfolgen:
Probe 1: 8 nm Cr, 150 nm SiO2, 60 nm Al;
Probe 2: 8 nm Cr, 220 nm SiO2, 60 nm Al;
Probe 3: 8 nm Cr, 380 nm SiO2, 60 nm Al.

Diese Proben unterscheiden sich nur durch die Dicke der dielektrischen Abstandsschicht. Die bei der Mottenaugenstruktur gemessene mittlere Reflexion (Fig. 8a) ist gegenüber der bei Proben mit ebener Oberfläche gemessene Reflexion (Fig. 8b) deutlich gedämpft. Die mittlere visuelle Reflexion liegt bei diesen Proben zwischen 21% und 27%. Im Gegensatz zu der oben diskutierten Schichtfolge gemäß Fig. 5 tritt hierbei eine Interferenzerscheinung im Reflexionsspektrum auf. Das Spektrum ist durch Maxima und Minima gekennzeichnet, welche zur Farbausprägung der Mottenaugenstruktur genutzt werden können. Wenn jedoch eine größere Anzahl von Maxima im sichtbaren Wellenlängenbereich liegt, kommt es zu keiner nennenswerten Überbetonung einer Farbe im Farbspektrum und es entsteht ein dunkler neutraler Farbton. Für zunehmend größere Abstandsschichten verringert sich jedoch die Anzahl der Maxima. Die Probe 3 besitzt zwei Reflexionsmaxima. Sie erscheint daher nicht mehr farblich neutral, sondern zeigt einen dunkelgrünen Farbton.

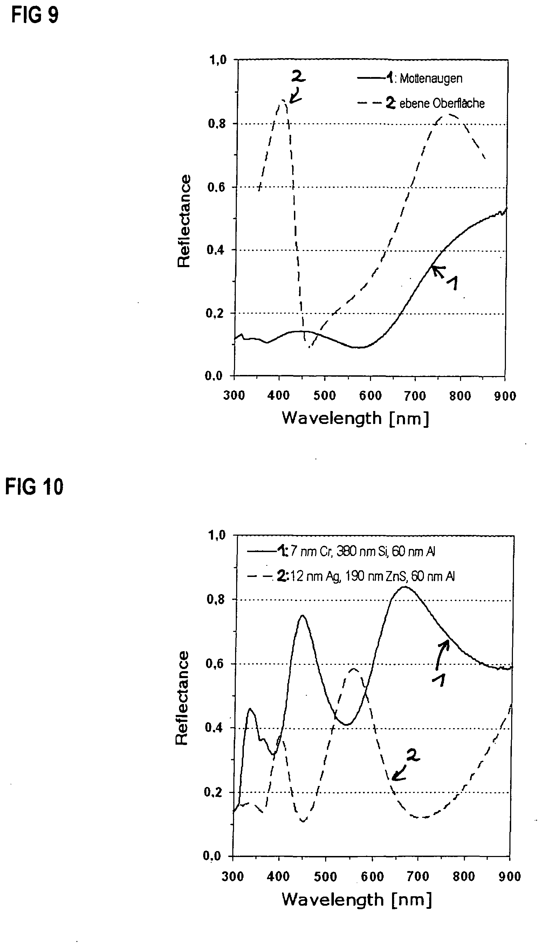

Für höher brechende Abstandsschichten vergrößert sich der optische Pfad in der Abstandsschicht. Fig. 9 zeigt die Reflexion einer Schichtfolge, bei der die Abstandsschicht durch eine 150 nm dicke ZnS-Schicht ausgebildet ist. Die metallischen Schichten entsprechen denen von Fig. 8. Die Probe mit ebener Oberfläche besitzt zwei Reflexionsmaxima, ähnlich wie die Probe 2 von Fig. 8, die eine 220 nm dicke SiO₂-Schicht als Abstandsschicht aufweist. Bei der Mottenaugenstruktur liegt die mittlere visuelle Reflexion bei ca. 11%, also deutlich niedriger als bei den Proben von Fig. 8. Es sind ferner keine ausgeprägten Maxima in der Reflexion vorhanden, nur im roten Spektralbereich steigt die Reflexion deutlich an.

Mottenaugenstrukturen können auch Farbkippeffekte zeigen. Fig. 10 zeigt Aufnahmen von zwei Proben:
Probe 1: 7 nm Cr, 380 nm Si, 60 nm Al;
Probe 2:12 nm Ag, 190 nm ZnS, 60 nm Al.

Der nanostrukturierte Bereich der Probe 1 von Fig. 10 erscheint bei senkrechter visueller Betrachtung blau. Wenn das Dünnschichtelement um ca. 45° gekippt wird, erscheint der nanostrukturierte Bereich goldfarben. Im unstrukturierten Bereich von Probe 1 erfolgt dagegen eine gegenläufige Änderung des Farbverlaufs, nämlich von zunächst gelb bei senkrechter Betrachtung zu blau für den gekippten Winkel. Probe 2 zeigt dagegen kaum eine Änderung der Farbe bei einer Variation des Einfallswinkels. Die glatte Oberfläche erscheint blau, während die mit der Mottenaugenstruktur versehene Fläche eine grüne Farbe zeigt.

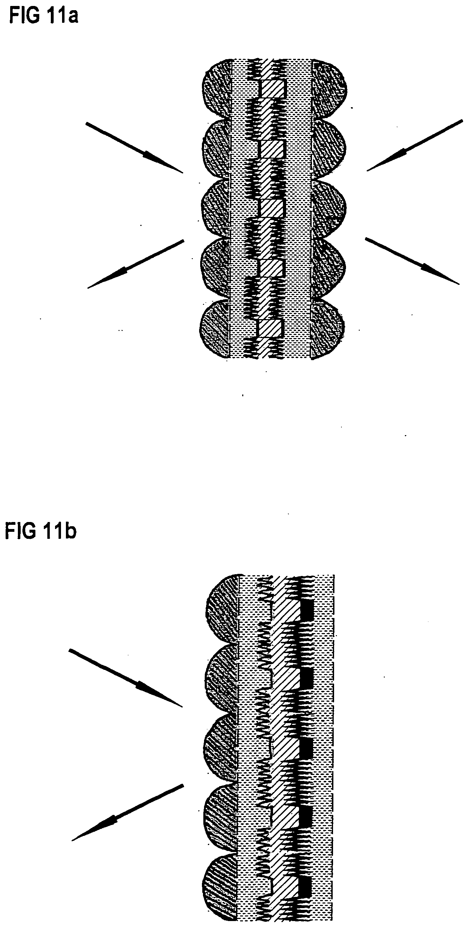

Das erfindungsgemäße Dünnschichtelement kann mit einer Mikrolinsenanordnung kombiniert werden. Figur 11a zeigt ein Durchsichtssicherheitselement, das beidseitig einen Moire-Effekt zeigt. Wenn auf eine transmissive Mikrobildanordnung, die durch Mottenaugen und Fabry-Perot Schichten gebildet wird, beidseitig Mikrolinsen aufgebracht werden, ist beidseitig sowohl im Auflicht als auch im Durchlicht ein Moire-Bild zu erkennen. In Fig. 11b ist ein Sicherheitselement gezeigt, das eine Moire-Magnifier-Anordnung mit nanostrukturierten Mikrobildern aufweist, wobei ein Trilayer mit einer halbtransparenten Metallschicht und einer reflektierenden Metallschicht (Spiegelschicht) als zentrales Element enthalten ist (Standard-Colour-Shift-Aufbau).

Das erfindungsgemäße Dünnschichtelements mit Mehrschichtstruktur kann durch ein Verfahren mit folgenden Schritten erhalten werden:
Bereitstellen eines Substrats, dessen Oberfläche zumindest einen nanostrukturierten Bereich mit kegelförmigen oder kegelähnlichen Erhebungen, die aperiodisch oder periodisch angeordnet sind, und zumindest einen ebenen Bereich aufweist;
Ausbilden von zwei metallischen Schichten und zumindest einer zwischen den zumindest zwei metallischen Schichten angeordneten dielektrische Abstandsschicht oberhalb des nanostrukturierten Bereiches der Substratoberfläche und oberhalb des ebenen Bereiches der Substratoberfläche durch Bedampfen.

Das Substrat, dessen Oberfläche zumindest einen nanostrukturierten Bereich mit kegelförmigen oder kegelähnlichen Erhebungen, die aperiodisch oder periodisch angeordnet sind, und zumindest einen ebenen Bereich aufweist, kann auch mit einer e-Beam-Anlage bzw. durch Interferenzholographie hergestellt werden. Bei diesen Verfahren kann anfangs in eine Quarzmaske durch Ätzen eine Oberflächenstruktur eingebracht werden. Die Oberflächenstruktur kann mittels eines galvanischen Prozesses oder durch Nano-Casting in ORMOCER kopiert werden. Ein solches Substrat mit einer gleichmäßig nanostrukturierten Oberfläche dient nun als Ausgangsmaterial zur Herstellung von konstrastreichen Dünnschichtelementen. Die laterale Strukturierung der Abformung kann durch Auf- oder Einbringen von Photolack in den lateral strukturierten Bereich, Belichtung mittels eines Laser-Writers und Auflösen des unvernetzten Photolackes mittels eines geeigneten Lösungsmittels verändert bzw. verfeinert werden. Auf diese Weise können lateral strukturierte Bereiche teilweise zu Bereichen mit glatter Oberfläche gestaltet werden. Gegebenenfalls kann die Belichtung in Form einer sogenannten Grauwertbelichtung durchgeführt werden. Auf diese Weise kann das Tiefenprofil der lateralen Strukturierung, das anfangs z.B. Vertiefungen mit einheitlicher Tiefe aufweist, so verändert werden, dass die laterale Strukturierung später Bereiche mit kontinuierlich zunehmenden und/oder abnehmenden Vertiefungen aufweist. Durch Nano-Casting bzw. Electro-Forming kann dann der Prägestempel erhalten werden.

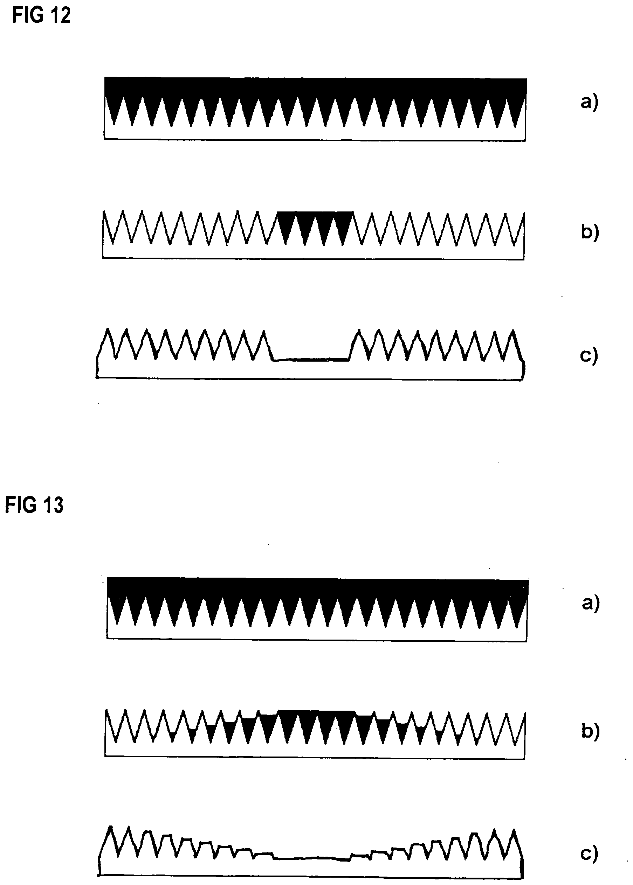

Fig. 12 zeigt die Schritte bei der Erzeugung eines in Fig. 12c dargestellten Prägestempels. Der Prägestempel wird in einem photolithographischen Prozess ausgehend von einer in Fig. 12a gezeigten nanostrukturierten ORMOCER-Abformung, die mit einer homogenen Photolackschicht versehen ist, hergestellt. Fig. 12b zeigt die Abformung von Fig. 12a nach dem Schritt des Photohärtens durch Binärbelichtung. In Fig. 12c ist der durch Nano-Casting oder Electro-Forming erzeugte Prägestempel gezeigt.

Gemäß den in Fig. 13 gezeigten Schritten für die Herstellung eines weiteren Prägestempels kann der Schritt des Belichtens in einem photolithographischen Verfahren auch in Form einer sogenannten Grauwertbelichtung durchgeführt werden, so dass nanostrukturierte Oberflächen mit kontinuierlich zunehmenden und kontinuierlich abnehmenden Vertiefungen entstehen (siehe Fig. 13b).

## Patentansprüche

1. Dünnschichtelement mit Mehrschichtstruktur für Sicherheitspapiere oder Wertdokumente, umfassend einen Trilayer mit zwei semitransparenten metallischen Schichten und einer zwischen den zwei semitransparenten metallischen Schichten angeordneten dielektrischen Abstandsschicht, wobei die Mehrschichtstruktur zumindest einen nanostrukturierten Bereich aufweist, in dem die Mehrschichtstruktur zu aperiodisch, d.h. nicht gleichmäßig beabstandet, angeordneten, kegelförmigen oder kegelähnlichen Erhebungen ausgebildet ist und die Mehrschichtstruktur zumindest einen ebenen Bereich aufweist,
wobei der nanostrukturierte Bereich dunkel und der ebene Bereich metallisch glänzend erscheinen.

2. Dünnschichtelement nach Anspruch 1, wobei der durchschnittliche Abstand zwischen den Erhebungen in einem Bereich von 50 nm bis 400 nm, bevorzugt in einem Bereich von 100 nm bis 300 nm, ist.

3. Dünnschichtelement nach einem der vorangehenden Ansprüche, wobei die durchschnittliche Höhe der Erhebungen in einem Bereich von 30 nm bis 500 nm ist.

4. Dünnschichtelement nach einem der vorangehenden Ansprüche, wobei die metallischen Schichten unabhängig voneinander aus Al, Ag, Cr, Ni, Cu, Pd, Au oder einer Legierung zweier oder mehrerer dieser Elemente gebildet sind.

5. Dünnschichtelement nach einem der vorangehenden Ansprüche, wobei die dielektrische Abstandsschicht aus SiO₂, ZnS, MgF_{2,} TiO₂ oder Ta₂O₅ gebildet ist.

6. Dünnschichtelement nach einem der vorangehenden Ansprüche, wobei das Dünnschichtelement in Form von Mustern, Zeichen oder einer Codierung vorliegt.

7. Dünnschichtelement nach einem der vorangehenden Ansprüche, wobei das Dünnschichtelement mit einer Mikrolinsenanordnung kombiniert ist.

8. Durchsichtssicherheitselement für Sicherheitspapiere, Wertdokumente und dergleichen, mit einem Träger und einem auf dem Träger aufgebrachten Dünnschichtelement nach einem der Ansprüche 1 bis 7.

9. Datenträger mit einem Dünnschichtelement nach einem der Ansprüche 1 bis 7, bei dem das Dünnschichtelement in oder über einem transparenten Fensterbereich oder einer durchgehenden Öffnung des Datenträgers angeordnet ist.

10. Datenträger nach Anspruch 9, wobei der Datenträger ein Wertdokument, wie eine Banknote, insbesondere eine Papierbanknote, eine Polymerbanknote, eine Folienverbundbanknote oder Ausweiskarte ist.

11. Verfahren zum Herstellen eines Dünnschichtelements mit Mehrschichtstruktur nach einem der Ansprüche 1 bis 7 für Sicherheitspapiere oder Wertdokumente, umfassend einen Trilayer mit zwei semitransparenten metallischen Schichten und einer zwischen den zwei semitransparenten metallischen Schichten angeordneten dielektrischen Abstandsschicht, wobei die Mehrschichtstruktur zumindest einen nanostrukturierten Bereich aufweist, in dem die Mehrschichtstruktur zu aperiodisch, d.h. nicht gleichmäßig beabstandet, angeordneten, kegelförmigen oder kegelähnlichen Erhebungen ausgebildet ist, und die Mehrschichtstruktur zumindest einen ebenen Bereich aufweist, und wobei das Verfahren die folgenden Schritte umfasst:
Bereitstellen eines Substrats, dessen Oberfläche zumindest einen nanostrukturierten Bereich mit kegelförmigen oder kegelähnlichen Erhebungen, die aperiodisch angeordnet sind, und zumindest einen ebenen Bereich aufweist;
Ausbilden von zwei semitransparenten metallischen Schichten und zumindest einer zwischen den zwei semitransparenten metallischen Schichten angeordneten dielektrischen Abstandsschicht oberhalb des nanostrukturierten Bereiches der Substratoberfläche und oberhalb des ebenen Bereiches der Substratoberfläche durch Bedampfen.

## Claims

1. A thin-film element with multilayer structure for security papers or value documents,
comprising a trilayer with two semitransparent metallic layers and a dielectric spacer layer arranged between the two semitransparent metallic layers, wherein the multilayer structure has at least one nanostructured region in which the multilayer structure is configured into aperiodically, i.e. not uniformly spaced, arranged, cone-shaped or cone-like elevations and the multilayer structure has at least one plane region,
wherein the nanostructured region appears dark and the plane region appears metallically lustrous.

2. The thin-film element according to claim 1, wherein the average distance between the elevations is in a region of 50 nm to 400 nm, preferably in a region of 100 nm to 300 nm.

3. The thin-film element according to any of the preceding claims, wherein the average height of the elevations is in a region of 30 nm to 500 nm.

4. The thin-film element according to any of the preceding claims, wherein the metallic layers independently of each other are formed of Al, Ag, Cr, Ni, Cu, Pd, Au or of an alloy of two or more of these elements.

5. The thin-film element according to any of the preceding claims, wherein the dielectric spacer layer is formed of SiO₂, ZnS, MgF₂, TiO₂ or Ta₂O₅.

6. The thin-film element according to any of the preceding claims, wherein the thin-film element is present in the form of patterns, characters or a coding.

7. The thin-film element according to any of the preceding claims, wherein the thin-film element is combined with a microlens array.

8. A see-through security element for security papers, value documents and the like, with a carrier and a thin-film element according to any of claims 1 to 7 applied to the carrier.

9. A data carrier having a thin-film element according to any of claims 1 to 7, in which the thin-film element is arranged in or over a transparent window region or a through opening of the data carrier.

10. The data carrier according to claim 9, wherein the data carrier is a value document, such as a bank note, in particular a paper bank note, a polymer bank note, a foil composite bank note or identity card.

11. A method for manufacturing a thin-film element having a multilayer structure according to any of claims 1 to 7 for security papers or value documents, comprising a trilayer with two semitransparent metallic layers and a dielectric spacer layer arranged between the two semitransparent metallic layers, wherein the multilayer structure has at least one nanostructured region in which the multilayer structure is configured into aperiodically, i.e. not uniformly spaced, arranged cone-shaped or cone-like elevations and the multilayer structure has at least one plane region, and wherein the method comprises the following steps:
providing a substrate whose surface has at least one nanostructured region with cone-shaped or cone-like elevations which are arranged aperiodically, and at least one plane region;
configuring two semitransparent metallic layers and at least one dielectric spacer layer arranged between the two semitransparent metallic layers, above the nanostructured region of the substrate surface and above the plane region of the substrate surface by vapour deposition.

## Revendications

1. Elément en couche mince à structure multicouche pour papiers de sécurité ou documents de valeur, comprenant un tricouche ayant deux couches métalliques semi-transparentes et une couche diélectrique d'espacement agencée entre les deux couches métalliques semi-transparentes, cependant que la structure multicouche comporte au moins une zone nanostructurée dans laquelle la structure multicouche est réalisée en protubérances en forme de cônes ou ressemblant à des cônes, agencées de manière apériodique, c'est à dire non espacées régulièrement, et que la structure multicouche comporte au moins une zone plane, cependant que la zone nanostructurée apparaît sombre et que la zone plane apparaît métalliquement brillante.

2. Elément en couche mince selon la revendication 1, cependant que l'espacement moyen entre les protubérances est compris entre 50 nm et 400 nm, de préférence entre 100 nm et 300 nm.

3. Elément en couche mince selon une des revendications précédentes, cependant que la hauteur moyenne des protubérances est comprise entre 30 nm et 500 nm.

4. Elément en couche mince selon une des revendications précédentes, cependant que les couches métalliques sont, indépendamment les unes des autres, constituées en Al, Ag, Cr, Ni, Cu, Pd, Au ou en un alliage de deux ou de plusieurs de ces éléments.

5. Elément en couche mince selon une des revendications précédentes, cependant que la couche diélectrique d'espacement est constituée de SiO₂, ZnS, MgF_{2,} TiO₂ ou Ta₂O₅.

6. Elément en couche mince selon une des revendications précédentes, cependant que l'élément en couche mince se trouve sous forme de motifs, de caractères ou d'une codification.

7. Elément en couche mince selon une des revendications précédentes, cependant que l'élément en couche mince est combiné avec un agencement de microlentilles.

8. Elément de sécurité en couche mince pour papiers de sécurité, documents de valeur et objets similaires, ayant un support et un élément en couche mince selon une des revendications de 1 à 7 placé sur le support.

9. Support de données ayant un élément en couche mince selon une des revendications de 1 à 7, dans lequel l'élément en couche mince est agencé dans ou par-dessus une zone fenêtre transparente ou une ouverture en continu du support de données.

10. Support de données selon la revendication 9, cependant que le support de données est un document de valeur tel qu'un billet de banque, en particulier un billet de banque en papier, un billet de banque polymère, un billet de banque en feuille composite ou une carte d'identification.

11. Procédé de fabrication d'un élément en couche mince à structure multicouche selon une des revendications de 1 à 7 pour papiers de sécurité ou documents de valeur, comprenant un tricouche ayant deux couches métalliques semi-transparentes et une couche diélectrique d'espacement agencée entre les deux couches métalliques semi-transparentes, cependant que la structure multicouche comporte au moins une zone nanostructurée dans laquelle la structure multicouche est réalisée en protubérances en forme de cônes ou ressemblant à des cônes, agencées de manière apériodique, c'est à dire non espacées régulièrement, et que la structure multicouche comporte au moins une zone plane, et cependant que le procédé comprend les étapes suivantes :
mise à disposition d'un substrat dont la surface comporte au moins une zone nanostructurée à protubérances en forme de cônes ou ressemblant à des cônes, agencées de manière apériodique, et au moins une zone plane ;
réalisation de deux couches métalliques semi-transparentes et d'au moins une couche diélectrique d'espacement agencée entre les deux couches métalliques semi-transparentes au-dessus de la zone nanostructurée de la surface du substrat et au-dessus de la zone plane de la surface du substrat, par dépôt en phase vapeur.
